# FASCICULE DE BREVET EUROPEEN

(11) **EP 2 052 972 B1**
(45) Date de publication et mention de la délivrance du brevet: **05.05.2010**
(21) Numéro de dépôt: 08165225.7
(22) Date de dépôt: 26.09.2008
(51) Int. Cl.: B64G 1/66, B64G 1/10, B64G 1/42

(54) **Dispositif de vol en formation destiné à une mission de coronographie solaire**
Formationsflugvorrichtung, die für eine Koronographie der Sonne vorgesehen ist
Formation flight device intended for a solar coronagraphy mission

(30) Priorité: 23.10.2007 FR 0707421
(43) Date de publication de la demande: 29.04.2009
(73) Titulaire: Thales, 92200 Neuilly-sur-Seine (FR)
(72) Inventeur: Leyre, Xavier, 06650 Opio (FR)
(74) Mandataire: Esselin, Sophie

(56) Documents cités:
- FR-A- 2 867 283
- VIVES, LAMY, AUCHERE, VIAL, KOUTCHMY, ARNAUD, PRADO, FRASSETO & NALETTO: "Formation flyers applied to solar coronal observations: the ASPICS mission" SOLAR PHYSICS AND SPACE WEATHER INSTRUMENTATION, vol. 5901, no. 590116-1, 2005, XP002480140
- LEYRE, SGHEDONI, VIVES, LAMY & PAILHAREY: "Concept of formation flyer for the ASPICS solar coronagraphic mission" UV/OPTICAL/IR SPACE TELESCOPES: INNOVATIVE TECHNOLOGIES AND CONCEPT II, vol. 5899, no. 58990N-1, 2005, XP002480141

## Description

La présente invention concerne un dispositif permettant l'étude de la couronne solaire. Pour étudier la couronne solaire, on réalise des coronographies, technique qui consiste à reproduire une éclipse totale artificielle du Soleil dans le but de s'affranchir de la lumière émise par le disque solaire. L'intérêt de cette technique, outre qu'elle permet une observation de la couronne solaire, réside aussi dans le fait qu'elle rend plus facilement visibles des objets orbitant près de lui.
Ce type d'étude est notamment rendue possible par des missions spatiales pouvant nécessiter le vol en formation de deux satellites : un satellite occulteur, dont le rôle est de créer une éclipse de Soleil artificielle du point de vue d'un coronographe embarqué sur un second satellite, que l'on appellera satellite porteur. Grâce à l'ombre portée par le satellite occulteur sur le satellite porteur, le coronographe peut observer la couronne solaire.
Par définition, le Soleil, le satellite occulteur et le coronographe sont alignés dans cet ordre.

Afin de produire l'électricité nécessaire à la mission de coronographie, le satellite porteur, ainsi que le satellite occulteur, comprennent un ou plusieurs panneaux solaires associés à des générateurs solaires.

Actuellement, la difficulté réside dans le fait qu'il faut à la fois que le coronographe se trouve dans l'ombre solaire, ombre portée par le satellite occulteur sur le satellite porteur, et que les panneaux solaires du satellite porteur soient suffisamment illuminés par le Soleil pour pouvoir fournir au satellite l'énergie nécessaire.

Les solutions aujourd'hui développées pour contourner ce problème consistent à déployer des panneaux solaires de part de d'autre du satellite porteur à l'aide de bras mécaniques. Le déploiement de ces panneaux solaires permet de mettre ces derniers hors de portée de l'ombre solaire générée par le satellite occulteur.

Ce type de solution présente les inconvénients majeurs d'une complexité de mise en oeuvre et d'un coût importants. En outre, les structures additionnelles que constituent les long bras mécaniques nécessaires au déploiement des panneaux solaires engendrent un surplus de masse important, et nécessitent des mécanismes de gerbages et de dégerbages afin d'accommoder le dispositif sous la coiffe du lanceur, ces mécanismes augmentant encore la complexité et le coût.
Surtout, tous ces mécanismes complexes présentent des risques de pannes élevés, des pannes qui peuvent mener à une perte totale ou partielle de la mission.

Le document "Formation flyers applied to solar coronal observations: the ASPICS mission" de Vives, Lamy, Auchere, Vial, Koutchmy, Arnaud, Prado, Frasseto & Naletto, - Proceedings of the SPIE, Vol. 5901, Num. 5901 16-1, 2005, XP002480140 - décrit toutes les caractéristiques du préambule de la revendication 1.

Ainsi, un but de l'invention est notamment de pallier les inconvénients évoqués ci-dessus. En effet, plutôt que de déployer les panneaux solaires hors du cône d'ombre portée par le satellite occulteur sur le satellite porteur, la présente invention propose d'une certaine façon de déporter l'ombre vers une zone excentrée du satellite porteur où on va positionner le coronographe. De cette façon, le coronographe est déporté sur un côté du satellite porteur et l'ombre portée par le satellite occulteur, dont on fait en sorte qu'elle soit approximativement centrée sur le coronographe, ne recouvre par conséquent pas entièrement la face orientée vers le Soleil du satellite porteur.
Un ensemble de panneaux solaires peut ainsi être fixé sur le satellite porteur, s'étendant préférentiellement dans la direction opposée au côté sur lequel a été déporté le coronographe.

A cet effet, l'invention a pour objet un dispositif de vol en formation destiné à une mission de coronographie solaire constitué :
- d'un satellite porteur présentant un centre qui, avec le centre du Soleil définit un axe du satellite porteur, ledit satellite porteur comportant un coronographe orienté vers le Soleil et au moins un panneau solaire situé sur une face dudit satellite porteur orientée vers le Soleil,
- d'un satellite occulteur situé entre le Soleil et le satellite porteur, générant une ombre portée sur le satellite porteur, le Soleil, le satellite occulteur et le coronographe étant alignés dans cet ordre et définissant un axe de visée du coronographe, et l'ombre portée par le satellite occulteur sur le satellite porteur masquant toute la partie centrale du Soleil, appelé disque solaire, pour le coronographe, permettant audit coronographe d'imager la couronne solaire,
**caractérisé en ce que** le coronographe est excentré, déporté sur un côté du satellite porteur, l'axe de visée du coronographe étant distinct de l'axe du satellite porteur, et le maintien du satellite occulteur sur ledit axe de visée du coronographe entraînant un déport de l'ombre portée par le satellite occulteur vers le côté du satellite porteur où se trouve le coronographe, de sorte que l'ombre portée par le satellite occulteur sur le satellite porteur ne recouvre pas entièrement la face orientée vers le Soleil dudit satellite porteur et, en conséquence, le panneau solaire est placé de telle façon qu'il n'est pas entièrement recouvert par ladite ombre portée.

Avantageusement, le panneau solaire est excentré, déporté à l'opposé du coronographe sur le satellite porteur.
Avantageusement, le panneau solaire est fixe sur le satellite porteur.
Avantageusement, un radiateur fixe situé à proximité du coronographe, dans la direction opposée au Soleil, permet de réguler la température au niveau du coronographe.
Avantageusement, le satellite porteur comporte au moins un générateur solaire associé au panneau solaire et permettant de produire l'énergie nécessaire audit dispositif.
Avantageusement, le coronographe est excentré, déporté vers un angle du satellite porteur, permettant ainsi l'illumination par le Soleil d'un maximum de surface de la face orientée vers le Soleil du satellite porteur, et par conséquent du panneau solaire qu'elle contient.
Avantageusement, le satellite porteur comporte en outre des propulseurs, pouvant être des éjecteurs de gaz froid, permettant de contrôler la position relative du satellite porteur et du coronographe par rapport au satellite occulteur et par rapport au Soleil.
Avantageusement, le satellite occulteur comporte en outre des propulseurs, pouvant être des éjecteurs de gaz froid, permettant de contrôler la position relative du satellite occulteur par rapport au satellite porteur et au coronographe et par rapport au Soleil.
Avantageusement, le satellite porteur comporte en outre un dispositif de métrologie optique permettant de connaître et de contrôler la position relative du satellite porteur et du coronographe par rapport au satellite occulteur.

D'autres caractéristiques et avantages de l'invention apparaîtront à l'aide de la description qui suit faite en regard des dessins annexés qui représentent :
- la figure 1 : le schéma d'un exemple de dispositif de vol en formation comprenant un coronographe solaire dans l'état de l'art ;
- la figure 2 : le schéma d'un exemple de dispositif de vol en formation comprenant un coronographe solaire selon l'invention ;
- la figure 3 : l'illustration d'un exemple de satellite porteur dans une configuration possible du dispositif selon l'invention ;
- la figure 4 : l'illustration d'un exemple de satellite occulteur dans une configuration possible du dispositif selon l'invention ;
- la figure 5 : la représentation schématique d'un exemple de dispositif selon l'invention dans une coiffe quelconque d'un lanceur.

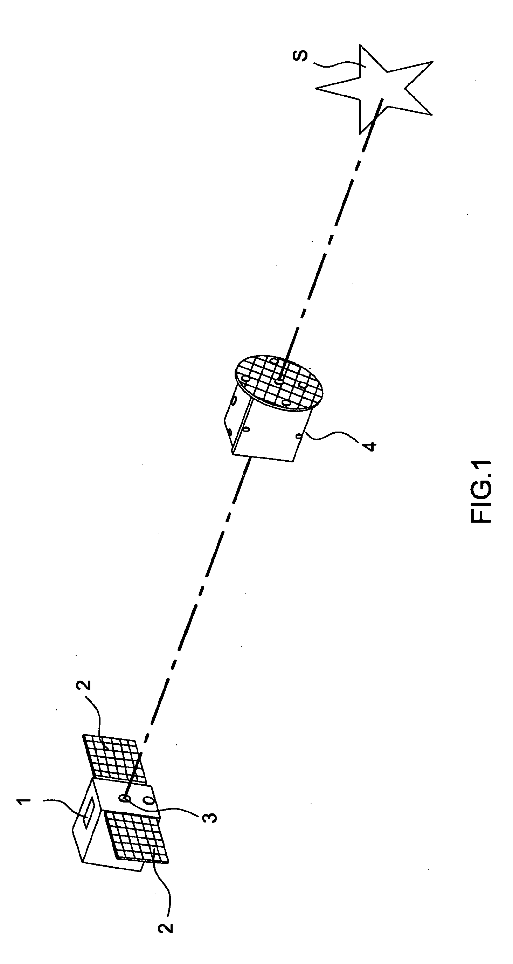

La figure 1 présente un schéma illustrant les dispositifs de vol en formation incluant un coronographe mis au point actuellement. Ainsi, pour étudier la couronne du Soleil S, un satellite occulteur 4 est positionné entre un satellite porteur 1 comprenant un coronographe 3 et le Soleil S.

De cette façon, le satellite occulteur 4 masque la partie centrale du Soleil du point de vue du coronographe 3 qui peut donc imager la couronne solaire. Afin de produire l'énergie nécessaire à la mission, le satellite porteur 1 dispose de panneaux solaires 2. Afin que ceux-ci soient suffisamment illuminés par le Soleil S, et donc en dehors du cône d'ombre créé par le satellite occulteur 4, les panneaux solaires 2 sont déployés de part et d'autre du satellite porteur 1. Ce déploiement est nécessairement effectué après la mise en position du satellite porteur 1 à son point d'observation ; en effet, les panneaux 2 déployés présentent un encombrement bien trop important pour la coiffe des lanceurs actuels. Ainsi, des mécanismes de déploiement complexes, non représentés sur le schéma, comprenant de longs bras mécaniques et des mécanismes de gerbages et de dégerbages pour l'accommodation sous la coiffe du lanceur, sont rendus indispensables. Ils augmentent à la fois la complexité de conception, la masse, le coût, mais aussi le risque de panne. Une telle panne d'un mécanisme utile au déploiement des panneaux solaires 2 peut entraîner la perte totale ou partielle de la mission.
La présente invention permet notamment de s'affranchir de ce problème.

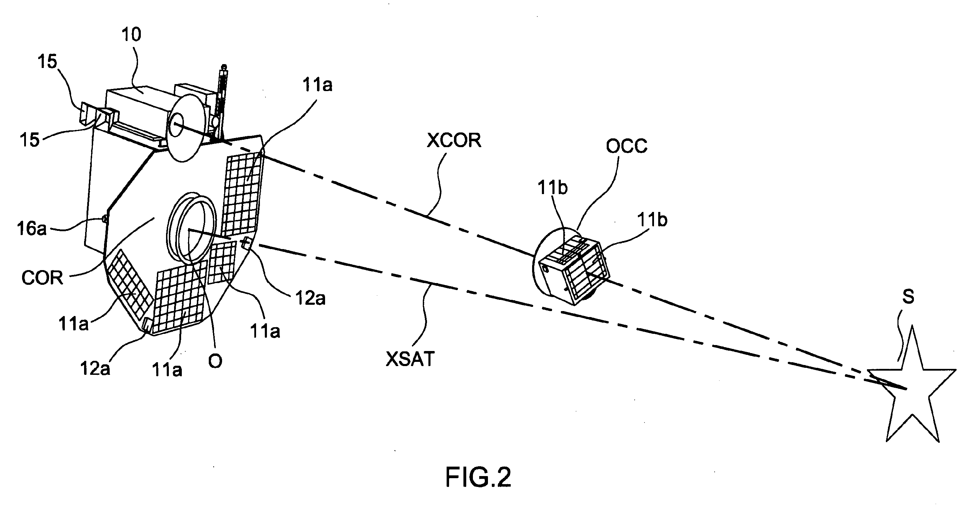

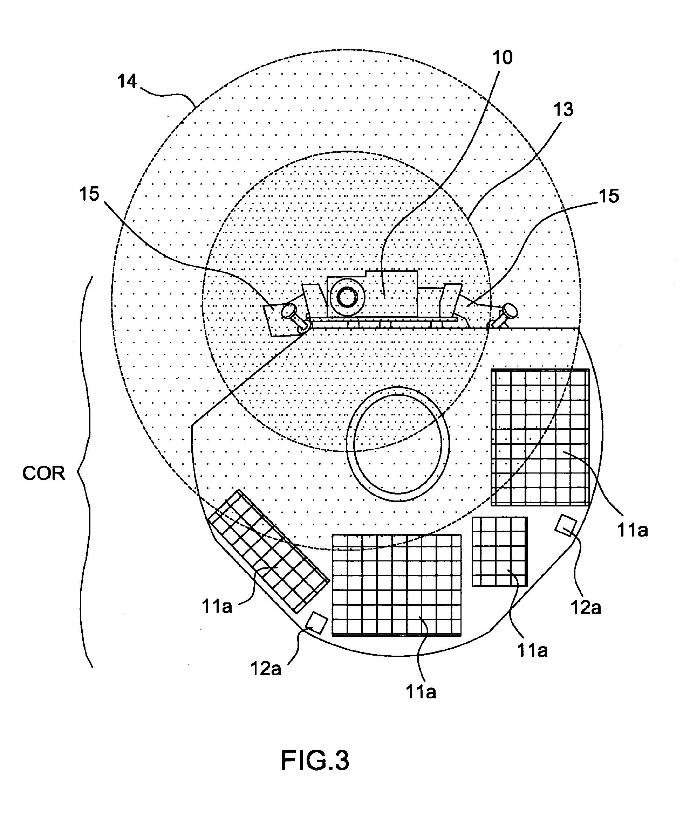

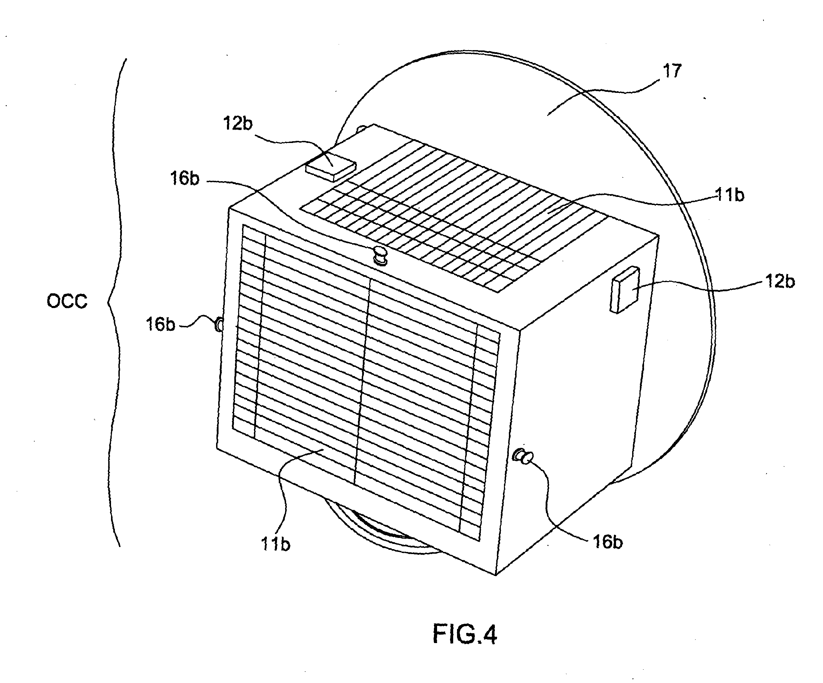

La figure 2 illustre le principe de l'invention. L'idée centrale du présent brevet est en fait de déporter le coronographe 10 en périphérie du satellite porteur COR. En effet, le satellite occulteur OCC se trouve nécessairement sur l'axe de visée XCOR du coronographe 10, puisque pour pouvoir imager correctement la couronne solaire, le coronographe doit se trouver dans l'ombre portée par le satellite occulteur OCC ; il s'agit ici de conserver l'alignement Soleil - satellite occulteur OCC - coronographe 10. L'axe de visée XCOR du coronographe 10 n'est donc pas confondu avec l'axe du satellite porteur XSAT, axe passant par le centre O du satellite porteur COR et le centre du Soleil S. Ce déport du coronographe 10 en périphérie du satellite porteur COR va par conséquent entraîner le déport correspondant du cône d'ombre créé par le satellite occulteur OCC vers la périphérie du satellite porteur COR, là où se trouve le coronographe 10. En effet, le coronographe 10 étant positionné de façon excentrée sur le satellite porteur COR, le satellite occulteur OCC est décalé, il est maintenu sur l'axe de visée XCOR du coronographe 10 et il quitte donc l'axe du satellite porteur XSAT, de façon à ce que le coronographe 10 se trouve bien dans l'ombre portée par le satellite occulteur OCC.
Le positionnement relatif du satellite porteur COR et du satellite occulteur OCC est quant à lui assuré à l'aide d'un capteur métrologique optique non représenté ici. Par ailleurs, les panneaux solaires 11a, les senseurs solaires 12a, les senseurs d'étoiles 15 et les propulseurs 16a seront décrits à l'aide de la figure 3 tandis que le panneau solaire 11 b sera mentionné lors de la description de la figure 4.

En conséquence, la face orientée vers le Soleil du satellite porteur COR n'est pas entièrement recouverte par l'ombre du satellite occulteur OCC ; ce point sera développé lors de la description de la figure 3.
Par ailleurs, la régulation thermique du dispositif peut être assurée par des radiateurs fixés sur le coronographe 10 et sur la caisse du satellite porteur COR dans la direction opposée au Soleil.

La figure 3 illustre un exemple d'agencement du satellite porteur COR comprenant le coronographe 10 dans une configuration possible du dispositif selon l'invention.
Ainsi, le cône d'ombre représenté par les zones 13, zone d'ombre totale, et 14, zone de pénombre dégressive, ne recouvre pas entièrement la surface orientée vers le Soleil du satellite porteur COR. Par conséquent, des panneaux solaires 11 a peuvent être placés sur ladite face orientée vers le Soleil du satellite porteur COR. Ces panneaux solaires 11a bénéficient d'une illumination satisfaisante, leur permettant de produire l'énergie nécessaire à la mission. La disposition de ces panneaux solaires 11a en figure 2 n'est qu'un exemple d'agencement respectant le concept du présent brevet. Suivant le même principe, d'autres dispositions d'un ou de plusieurs panneaux solaires sont bien entendu possibles.
Par ailleurs, les senseurs solaires 12a permettent de vérifier l'illumination par le Soleil du satellite porteur COR. Quant aux senseurs d'étoiles 15, ils sont principalement utilisés pour le positionnement absolu et relatif par rapport au satellite occulteur OCC du satellite porteur COR. Enfin, des petits propulseurs (16a sur la figure 2), par exemple des éjecteurs de gaz froid, sont positionnés en différents endroits du satellite porteur COR afin de permettre des déplacements de ce dernier.

La figure 4 représente un exemple de satellite occulteur OCC. La zone circulaire ou quasi circulaire 17 est celle qui va principalement créer le cône d'ombre destiné à masquer le disque solaire, c'est-à-dire toute la partie centrale du Soleil, du point de vue du coronographe 10, lui permettant d'observer la couronne solaire. Pour son fonctionnement, le satellite occulteur OCC a besoin de panneaux solaires 11 b, fixés sur les faces orientées vers le soleil, et qui fourniront l'énergie nécessaire.
D'autre part, les senseurs solaires 12b permettent de vérifier l'illumination des zones orientées vers le Soleil du satellite occulteur OCC tandis que les propulseurs 16b, pouvant être des éjecteurs de gaz froid, permettent le repositionnement du satellite occulteur OCC.

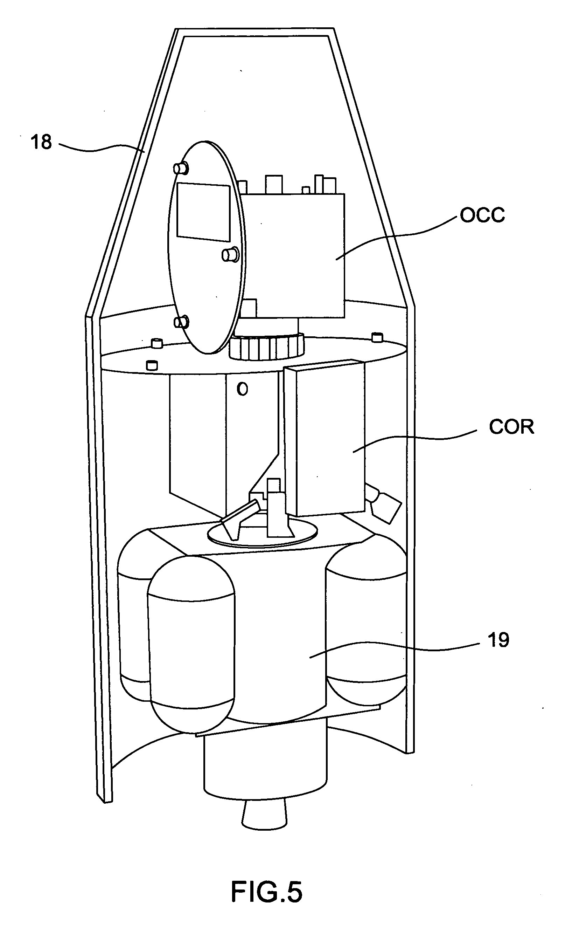

La figure 5 illustre la possibilité d'intégrer le dispositif décrit dans le présent brevet à l'intérieur d'une coiffe d'un lanceur standard. Contrairement aux dispositifs actuels, pour lesquels les panneaux solaires du satellite porteur sont déportés de part et d'autre dudit satellite, et donc déployés une fois le satellite mis en position dans l'espace, du fait du manque de place dans la coiffe du lanceur, on constate ici que les deux satellites COR et OCC peuvent être intégrés sans difficulté dans la coiffe 18 d'un lanceur actuel, dont le moteur du dernier étage 19 est représenté de façon schématique simple.
Un des principaux intérêts de l'invention est en effet l'absence rendue possible des mécanismes complexes nécessaires au déploiement de panneaux solaires. Les risques de casse et de panne sont ainsi minimisés, tandis que la conception et l'intégration sont grandement facilitées.

En résumé, l'invention présente donc l'avantage de proposer un dispositif de vol en formation destiné à une mission de coronographie solaire comportant des panneaux solaires fixes, ne nécessitant aucun déploiement, grâce à une accommodation dissymétrique du coronographe se traduisant par un déport dudit coronographe sur un côté du satellite porteur.

Ce déport du coronographe implique, du fait de l'alignement dans cet ordre du Soleil, du satellite occulteur et du coronographe, un déport de l'ombre portée par le satellite occulteur sur le satellite porteur, permettant à une part importante de la surface orientée vers le Soleil du satellite porteur d'être suffisamment illuminée pour que des panneaux solaires fixés sur cette surface soit en mesure de fournir au satellite porteur, et au coronographe en particulier, l'énergie nécessaire à la mission.

## Revendications

1. Dispositif de vol en formation destiné à une mission de coronographie solaire constitué :
• d'un satellite porteur (COR) présentant un centre (O) qui, avec le centre du Soleil (S), définit un axe du satellite porteur (XSAT), ledit satellite porteur (COR) comportant un coronographe (10) orienté vers le Soleil (S) et au moins un panneau solaire (11a)
• d'un satellite occulteur (OCC), situé entre le Soleil (S) et le satellite porteur (COR), générant une ombre portée (13,14) sur le satellite porteur (COR), le Soleil (S), le satellite occulteur (OCC) et le coronographe (10) étant alignés dans cet ordre et définissant un axe de visée (XCOR) du coronographe (10), et l'ombre portée (13,14) par le satellite occulteur (OCC) sur le satellite porteur (COR) masquant toute la partie centrale du Soleil (S), appelée disque solaire, pour le coronographe (10), permettant audit coronographe (10) d'imager la couronne solaire,
• le coronographe (10) étant excentré, déporté sur un côté du satellite porteur (COR), l'axe de visée (XCOR) du coronographe (10) est distinct de l'axe du satellite porteur (XSAT), et le maintien du satellite occulteur (OCC) sur ledit axe de visée (XCOR) du coronographe (10) entraîne un déport de l'ombre portée (13,14) par le satellite occulteur (OCC) vers le côté du satellite porteur (COR) où se trouve le coronographe (10), de sorte que l'ombre portée (13,14) par le satellite occulteur (OCC) sur le satellite porteur (COR) ne recouvre par entièrement la face orientée vers le Soleil (S) dudit satellite porteur (COR) et, **caractérisé en ce que** le panneau solaire (11a) est situé sur une face dudit satellite porteur (COR) orientée vers le Soleil (S) et placé de telle façon qu'il n'est pas entièrement recouvert par ladite ombre portée (13,14).

2. Dispositif selon la revendication 1, **caractérisé en ce que** le panneau solaire (11a) est excentré, déporté à l'opposé du coronographe (10) sur le satellite porteur (COR).

3. Dispositif selon l'une quelconque des revendications 1 à 2, **caractérisé en ce que** le panneau solaire (11a) est fixe sur le satellite porteur (COR).

4. Dispositif selon l'une quelconque des revendications 1 à 3, **caractérisé en ce qu'**un radiateur fixe situé à proximité du coronographe (10), dans la direction opposée au Soleil (S), permet de réguler la température au niveau du coronographe.

5. Dispositif selon l'une quelconque des revendications 1 à 4, **caractérisé en ce que** le satellite porteur (COR) comporte au moins un générateur solaire associé au panneau solaire (11a) et permettant de produire l'énergie nécessaire audit dispositif.

6. Dispositif selon l'une quelconque des revendications 1 à 5, **caractérisé en ce que** le coronographe (10) est excentré, déporté vers un angle du satellite porteur (COR), permettant ainsi l'illumination par le Soleil (S) d'un maximum de surface de la face orientée vers le Soleil (S) du satellite porteur (COR), et par conséquent du panneau solaire (11a) qu'elle contient.

7. Dispositif selon l'une quelconque des revendications 1 à 6, **caractérisé en ce que** le satellite porteur (COR) comporte en outre des propulseurs (16a), pouvant être des éjecteurs de gaz froid, permettant de contrôler la position relative du satellite porteur (COR) et du coronographe (10) par rapport au satellite occulteur (OCC) et par rapport au Soleil (S).

8. Dispositif selon l'une quelconque des revendications 1 à 7, **caractérisé en ce que** le satellite occulteur (OCC) comporte en outre des propulseurs (16b), pouvant être des éjecteurs de gaz froid, permettant de contrôler la position relative du satellite occulteur (OCC) par rapport au satellite porteur (COR) et au coronographe (10) et par rapport au Soleil (S).

9. Dispositif selon l'une quelconque des revendications 1 à 8, **caractérisé en ce que** le satellite porteur (COR) comporte en outre un dispositif de métrologie optique permettant de connaître et de contrôler la position relative du satellite porteur (COR) et du coronographe (10) par rapport au satellite occulteur (OCC).

## Claims

1. A formation flight device designed for a solar coronagraphy mission comprising:
- a carrier satellite (COR) having a centre (O) which, with the centre of the Sun (S), defines an axis of the carrier satellite (XSAT), said carrier satellite (COR) comprising a coronagraph (10) oriented toward the Sun (S) and at least one solar panel (11a),
- an occulter satellite (OCC), located between the Sun (S) and the carrier satellite (COR), creating a drop shadow (13, 14) cast on the carrier satellite (COR); the Sun (S), the occulter satellite (OCC) and the coronagraph (10) being aligned in this order and defining an axis of sight (XCOR) of the coronagraph (10), and the drop shadow (13, 14) cast by the occulter satellite (OCC) on the carrier satellite (COR) masking the entire central section of the Sun (S), referred to as the solar disk, for the coronagraph (10), allowing said coronagraph (10) to take images of the solar corona,
the coronagraph (10) being eccentric and offset on an edge of the carrier satellite (COR), the axis of sight (XCOR) of the coronagraph (10) is distinct from the axis of the carrier satellite (XSAT), and maintaining the occulter satellite (OCC) on said axis of sight (XCOR) of the coronagraph (10) causes the drop shadow (13, 14) cast by the occulter satellite (OCC) to be offset toward the edge of the carrier satellite (COR) on which the coronagraph (10) is mounted, so that the shadow (13, 14) cast by the occulter satellite (OCC) on the carrier satellite (COR) does not entirely cover the surface of said carrier satellite (COR) oriented toward the Sun (S) and **characterised in that** the solar panel (11) is located on a surface of said carrier satellite (COR) oriented toward the Sun (S) and is positioned so that it is not entirely covered by said drop shadow (13, 14).

2. The device according to claim 1, **characterised in that** the solar panel (11a) is eccentric and offset on the opposite side from the coronagraph (10) on the carrier satellite (COR).

3. The device according to any one of claims 1 to 2, **characterised in that** the solar panel (11a) is mounted to the carrier satellite (COR).

4. The device according to any one of claims 1 to 3, **characterised in that** a fixed radiator located near the coronagraph (10), in the opposite direction to the Sun (S), allows the temperature of the coronagraph to be controlled.

5. The device according to any one of claims 1 to 4, **characterised in that** the carrier satellite (COR) comprises at least one solar generator connected to the solar panel (11a), allowing the required energy for said device to be produced.

6. The device according to any one of claims 1 to 5, **characterised in that** the coronagraph (10) is eccentric and offset to an angle of the carrier satellite (COR), thus allowing the Sun (S) to illuminate a maximum surface area on the surface of the carrier satellite (COR) oriented toward the Sun (S) and, as a consequence, of the solar panel (11a) mounted thereto.

7. The device according to any one of claims 1 to 6, **characterised in that** the carrier satellite (COR) further comprises thrusters (16a), which may be cold gas ejectors, allowing the relative position of the carrier satellite (COR) and the coronagraph (10) to be controlled relative to the occulter satellite (OCC) and relative to the Sun (S).

8. The device according to any one of claims 1 to 7, **characterised in that** the occulter satellite (OCC) further comprises thrusters (16b), which may be cold gas ejectors, allowing the relative position of the occulter satellite (OCC) to be controlled relative to the carrier satellite (COR) and to the coronagraph (10) and relative to the Sun (S).

9. The device according to any one of claims 1 to 8, **characterised in that** the carrier satellite (COR) further comprises an optical metrology device allowing the relative position of the carrier satellite (COR) and the coronagraph (10) relative to the occulter satellite to be known and controlled.

## Patentansprüche

1. Formationsflugvorrichtung, die für eine Koronographie der Sonne vorgesehen ist, die Folgendes umfasst:
- einen Trägersatelliten (COR) mit einem Mittelpunkt (O), der mit dem Mittelpunkt der Sonne (S) eine Achse des Trägersatelliten (XSAT) definiert, wobei der Trägersatellit (COR) einen zur Sonne (S) hin orientierten Koronografen (10) und wenigstens ein Solarmodul (11a) umfasst,
- einen okkultierenden Satelliten (OCC), der sich zwischen der Sonne (S) und dem Trägersatelliten (COR) befindet und einen Schlagschatten (13, 14) erzeugt, der auf den Trägersatelliten (COR) geworfen wird, wobei die Sonne (S), der okkultierende Satellit (OCC) und der Koronograf (10) in dieser Reihenfolge aufeinander fluchten und eine Sichtachse (XCOR) des Koronografen (10) bilden, und wobei der von dem okkultierenden Satelliten (OCC) auf den Trägersatelliten (COR) geworfene Schlagschatten (13, 14) den gesamten mittleren Teil der Sonne (S), als Sonnenscheibe bezeichnet, für den Koronografen (10) maskiert, so dass der Koronograf (10) Bilder von der Korona der Sonne aufnehmen kann,
- wobei der Koronograf (10) exzentrisch und auf einer Seite des Trägersatelliten (COR) versetzt ist, die Sichtachse (XCOR) des Koronografen (10) sich von der Achse des Trägersatelliten (XSAT) unterscheidet und das Halten des okkultierenden Satelliten (OCC) auf der Sichtachse (SCOR) des Koronografen (10) bewirkt, dass der vom okkultierenden satelliten (OCC) geworfene Schlagschatten (13, 14) zu der Seite des Trägersatelliten (COR) hin versetzt ist, auf der der Koronograf (10) montiert ist, so dass der vom okkultierenden Satelliten (OCC) auf den Trägersatelliten (COR) geworfene Schlagschatten die zur Sonne (S) hin orientierte Fläche des Trägersatelliten (COR) nicht ganz bedeckt, und **dadurch gekennzeichnet, dass** sich das Solarmodul (11) auf einer zur Sonne (S) hin orientierten Fläche des Trägersatelliten (COR) befindet und so positioniert ist, dass sie von dem Schlagschatten (13, 14) nicht gänzlich bedeckt wird.

2. Vorrichtung nach Anspruch 1, **dadurch gekennzeichnet, dass** das Solarmodul (11a) exzentrisch und dem Koronografen (10) gegenüber liegend auf dem Trägersatelliten (COR) versetzt ist.

3. Vorrichtung nach Anspruch 1 oder 2, **dadurch gekennzeichnet, dass** das Solarmodul (11a) auf dem Trägersatelliten (COR) befestigt ist.

4. Vorrichtung nach einem der Ansprüche 1 bis 3, **dadurch gekennzeichnet, dass** ein in der Nähe des Koronografen (10) in der der Sonne (S) entgegengesetzten Richtung befindlicher fester Radiator die Regelung der Temperatur am Koronografen zulässt.

5. Vorrichtung nach einem der Ansprüche 1 bis 4, **dadurch gekennzeichnet, dass** der Trägersatellit (COR) wenigstens einen mit dem Solarmodul (11a) verbundenen Solargenerator umfasst, mit dem die von der Vorrichtung benötigte Energie erzeugt werden kann.

6. Vorrichtung nach einem der Ansprüche 1 bis 5, **dadurch gekennzeichnet, dass** der Koronograf (10) exzentrisch in einem Winkel zum Trägersatelliten (COR) versetzt ist, so dass die Sonne (S) einen maximalen Oberflächenbereich des zur Sonne (S) hin orientierten Trägersatelliten (COR) und folglich des daran montierten Solarmoduls (11a) beleuchten kann.

7. Vorrichtung nach einem der Ansprüche 1 bis 6, **dadurch gekennzeichnet, dass** der Trägersatellit (COR) ferner Triebwerke (16a) umfasst, die Kaltgasstrahler sein können, mit denen die relative Position des Trägersatelliten (COR) und des Koronografen (10) in Bezug auf den okkultierenden Satelliten (OCC) und in Bezug auf die Sonne (S) gesteuert werden kann.

8. Vorrichtung nach einem der Ansprüche 1 bis 7, **dadurch gekennzeichnet, dass** der okkultierende Satellit (OCC) ferner Triebwerke (16b) umfasst, die Kaltgasstrahler sein können, mit denen die relative Position des okkultierenden Satelliten (COR) in Bezug auf den Trägersatelliten (OCC) und auf den Koronografen (10) und in Bezug auf die Sonne (S) gesteuert werden kann.

9. Vorrichtung nach einem der Ansprüche 1 bis 8, **dadurch gekennzeichnet, dass** der Trägersatellit (COR) ferner eine optische Metrologievorrichtung umfasst, mit der die relative Position des Trägersatelliten (COR) und des Koronografen (10) in Bezug auf den okkultierenden Satelliten ermittelt und gesteuert werden kann.
